# FASCICULE DE BREVET EUROPEEN

(11) **EP 0 549 383 B1**
(45) Date de publication et mention de la délivrance du brevet: **27.09.1995**
(21) Numéro de dépôt: 92403058.8
(22) Date de dépôt: 13.11.1992
(51) Int. Cl.: F16C 11/06

(54) **Cage d'articulation à rotule**
Käfig für Drehgelenk
Ball-joint cage

(30) Priorité: 28.11.1991 FR 9114706
(43) Date de publication de la demande: 30.06.1993
(73) Titulaire: SOCIETE CLUSIENNE D'HORLOGERIE ET D'APPAREILS DE PRECISION, F-74302 Cluses Cédex (FR)
(72) Inventeur: Balloffet, Patrick, F-92200 Neuilly s/Seine (FR); Rapin, Georges, F-74300 Thiez (FR)
(74) Mandataire: Ramey, Daniel

(56) Documents cités:
- EP-A- 0 413 623
- DE-A- 3 151 747
- FR-A- 2 194 258

## Description

L'invention concerne une cage d'articulation à rotule, du type permettant un montage relativement aisé de la rotule dans la cage par poussée de la rotule à l'intérieur de la cage, et permettant également le démontage de la rotule par traction sur celle-ci, l'effort de traction étant de préférence nettement plus important que l'effort de poussée exercé sur la rotule pour son montage dans la cage.

On connaît déjà, par le document FR-A-2 402 797, une articulation à rotule de ce type, dans laquelle la cage comprend un boîtier métallique tubulaire dans lequel est monté un coussinet en matière plastique à logement sphérique de réception de la rotule. Le coussinet présente une élasticité dans la direction axiale d'introduction de la rotule et est susceptible de se déplacer axialement à l'intérieur du boîtier rigide, entre une position où il facilite le montage de la rotule et une position où il résiste au démontage de la rotule.

Par ailleurs, il est souvent utile d'associer cette articulation à rotule à un système élastiquement déformable d'amortissement des vibrations et des chocs. Lorsque ce système est intégré à l'articulation à rotule, il se présente sous la forme d'un élément annulaire ou tubulaire interposé entre le boîtier rigide de la cage et un manchon extérieur de support.

Il en résulte alors une augmentation des dimensions extérieures de l'articulation à rotule et de son encombrement, ce oui crée des difficultés lorsque l'espace disponible pour l'implantation de l'articulation à rotule est limité.

On connaît également, par le document DE-A-31 51 747 (figures 7-10) une cage d'articulation à rotule selon le préambule de la revendication 1.

L'invention a pour objet une cage d'articulation à rotule qui est plus légère, plus simple et moins coûteuse que celles de la technique antérieure.

Elle a également pour objet une cage d'articulation à rotule qui puisse être associée à un système intégré d'amortissement des chocs et des vibrations sans qu'il en résulte une augmentation de l'encombrement de l'articulation à rotule.

Elle propose à cet effet une cage d'articulation à rotule du type permettant un montage de la rotule dans la cage par poussée de la rotule à l'intérieur de la cage et un démontage de la rotule par traction sur celle-ci, cette cage comprenant un boîtier rigide comportant un passage cylindrique d'introduction de la rotule, ce passage débouchant par une extrémité à l'extérieur du boîtier et par son autre extrémité dans une cavité sensiblement semi-sphérique formée au diamètre de la rotule, et des moyens élastiquement déformables qui sont montés dans le boîtier au raccordement entre le passage cylindrique et la cavité semi-sphérique dans un plan perpendiculaire à l'axe dudit passage et qui sont reçus dans un logement ayant une dimension dans le plan précité supérieure à celle des moyens élastiquement déformables pour permettre leur expansion élastique au montage et au démontage de la rotule, ces moyens comportant ou délimitant un orifice central de passage de la rotule et étant destinés à exercer sur celle-ci un effort élastique de serrage tendant à la maintenir dans la cavité semi-sphérique précitée, caractérisée en ce que le logement des moyens élastiquement déformables est une fente ou lumière formée dans le boîtier et débouchant à l'extérieur de celui-ci pour permettre le montage des moyens élastiquement déformables dans le boîtier.

Il en résulte une simplification du montage de l'articulation à rotule, ce montage nécessitant uniquement une introduction des moyens élastiquement déformables dans la fente ou lumière du boîtier, puis l'introduction de la rotule dans le boîtier. Ces opérations ne présentent aucune difficulté et peuvent être réalisées automatiquement ou à la main.

Dans un mode de réalisation préféré de l'invention, les moyens élastiquement déformables sont constitués d'une pièce plate en matière plastique rigide comportant l'orifice central précité, ainsi qu'une fente radiale reliant cet orifice à un bord de ladite pièce et permettant une expansion élastique radiale de celle-ci et de l'orifice central.

La cage d'articulation à rotule selon l'invention est ainsi composée de deux pièces, le boîtier et la pièce plate formant les moyens élastiquement déformables précités, ces deux pièces étant en matière plastique et pouvant avantageusement être obtenues directement de moulage.

Par ailleurs, la fente ou lumière précitée est de préférence à section transversale trapézoïdale dont la petite base est située du côté du passage cylindrique d'introduction de la rotule, et elle a une hauteur supérieure à l'épaisseur de la pièce plate.

Dans ces conditions, la pièce plate peut s'expanser radialement lorsqu'elle est poussée par la rotule en direction de la cavité semi-sphérique du boîtier à l'introduction de la rotule dans la cage, tandis qu'elle résiste à l'extraction de la rotule lorsqu'elle est au contraire tirée par celle-ci en direction du passage cylindrique précité lors du démontage de la rotule.

Selon une autre caractéristique de l'invention, la pièce plate précitée est montée par clipsage ou encliquetage élastique dans la fente ou lumière du boîtier.

Selon une autre caractéristique de l'invention, l'orifice central des moyens élastiquement déformables comporte une surface interne en anneau sphérique au diamètre de la rotule, destinée à s'appliquer sur une surface correspondante de la rotule pour le guidage en rotation de celle-ci.

Avantageusement, cet orifice central comporte également, du côté du passage cylindrique précité, une surface interne tronconique facilitant l'introduction de la rotule.

Selon une autre caractéristique de l'invention, le boîtier de la cage selon l'invention comporte une queue cylindrique tubulaire de montage d'une tige rigide, dont l'axe est par exemple perpendiculaire à celui du passage d'introduction de la rotule. Cette queue tubulaire vient de moulage avec le boîtier et comporte avantageusement un logement transversal de réception d'un insert tel qu'un écrou de fixation de la tige rigide et/ou une garniture en caoutchouc ou autre matière élastiquement déformable d'amortissement des vibrations et des chocs. Dans ce cas, le système d'amortissement des vibrations et des chocs est intégré à la queue tubulaire de la cage et ne modifie en rien l'encombrement de celle-ci.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en coupe axiale d'une articulation à rotule comprenant une cage selon l'invention;
la figure 2 est une vue schématique en coupe axiale, à plus grande échelle, du boîtier de cette cage;
la figure 3 est une vue en coupe transversale selon la ligne III-III de la figure 2;
la figure 4 est une vue de dessus d'une pièce plate de maintien de la rotule;
la figure 5 est une vue en coupe de cette pièce plate selon la ligne V-V de la figure 4;
les figures 6, 7 et 8 illustrent schématiquement les différentes phases du montage d'une rotule dans une cage selon l'invention.

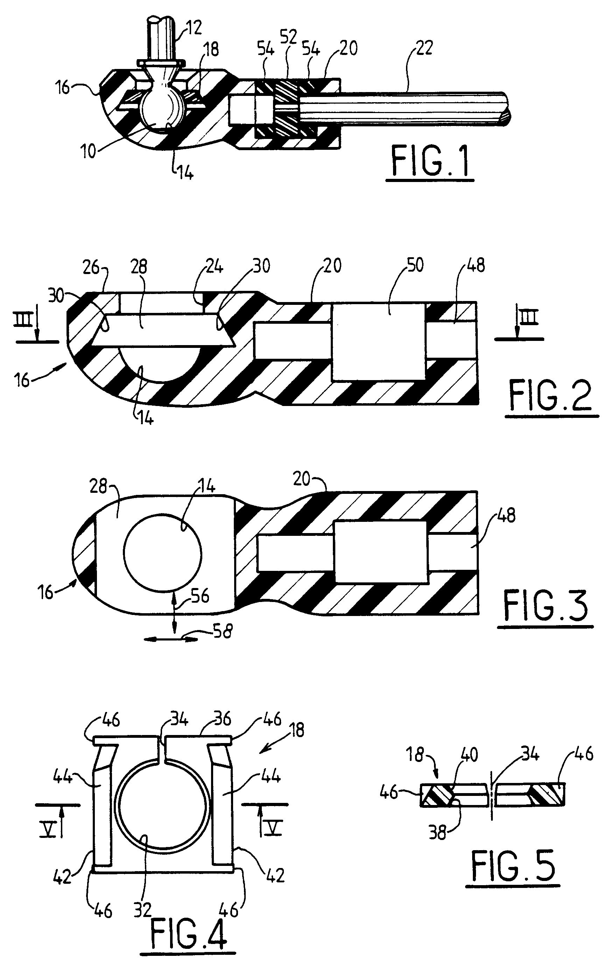

On a représenté en figure 1 une articulation à rotule selon l'invention, du type de celles utilisables dans l'industrie automobile, par exemple pour la commande des boîtes de vitesse.

La rotule 10 montée en bout d'une tige 12 est reçue dans une cavité semi-sphérique 14 d'un boîtier rigide 16 moulé en matière plastique et est maintenue en place par une pièce plate 18 également moulée en matière plastique et ayant également une fonction de guidage en rotation de la rotule.

Le boîtier 16 vient de moulage avec une queue tubulaire 20 qui reçoit l'extrémité d'une tige rigide 22 et qui peut comporter des moyens de fixation de cette extrémité de la tige et des moyens d'amortissement des vibrations et des chocs.

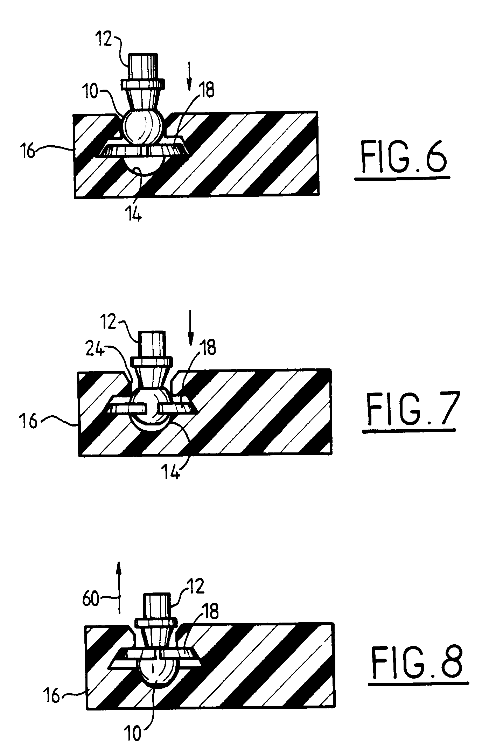

Le boîtier 16 est représenté à plus grande échelle dans les figures 2 et 3, et la pièce plate 18 dans les figures 4 et 5.

Comme on le voit mieux en figure 2, le boîtier 16 comprend un passage cylindrique 24 d'introduction de la rotule 10, ce passage cylindrique ayant un diamètre légèrement supérieur à celui de la rotule. Ce passage 24 débouche par une extrémité sur la face supérieure 26 du boîtier 16 et par son autre extrémité dans la cavité semi-sphérique 14 dont le diamètre est sensiblement égal à celui de la rotule 10 et qui est axialement alignée avec le passage 24.

Le boîtier 16 comprend par ailleurs une fente ou lumière traversante 28 de logement de la pièce 18, cette fente ou lumière s'étendant dans un plan perpendiculaire à l'axe du passage 24 et ayant des dimensions en largeur et en hauteur qui sont supérieures respectivement à la largeur et à l'épaisseur de la pièce 18 comme on le comprend d'après la figure 1.

Cette fente ou lumière 28 est formée dans le boîtier 16 entre le passage 24 et la cavité semi-sphérique 14 et a, dans la vue en coupe de la figure 2, une section trapézoïdale, sa petite base étant située du côté du passage 24 tandis que sa grande base est située du côté de la cavité semi-sphérique 14. Cette fente ou lumière 24 présente donc deux faces obliques 30 qui sont convergentes en direction de la face supérieure 26 du boîtier 16.

La pièce plate 18, représentée aux figures 4 et 5, a un contour sensiblement rectangulaire ou carré et comporte un orifice central 32 de passage de la rotule 10 et une fente radiale 34 qui relie cet orifice central à un côté 36 de la pièce 18, cette fente 34 permettant une expansion élastique radiale de la pièce 18 et de l'orifice central 32 dans le plan du dessin de la figure 4.

L'orifice central 32 a un diamètre interne inférieur à celui de la rotule 10 et sa surface interne comprend une première partie 38 en anneau sphérique dont le diamètre est sensiblement égal à celui de la rotule 10 et qui est orientée vers la cavité semi-sphérique 14 du boîtier. Cette surface interne de l'orifice central 32 comprend une seconde partie 40 de forme tronconique, qui est située du côté du passage cylindrique 24 et qui facilite le montage de la rotule 10.

Les deux côtés 42 de la pièce 18, qui sont parallèles à la fente 34, présentent des faces obliques 44 qui ont la même inclinaison que les faces obliques 30 de la fente ou lumière 28 formée dans le boîtier 16.

Enfin, les deux autres côtés de la pièce 18 comportent des rebords 46 qui permettent le montage de la pièce 18 dans la fente 28 par clipsage ou encliquetage élastique et qui assurent son maintien ou positionnement dans le boîtier 16 par butée sur les bords des extrémités de la fente ou lumière 28.

La queue tubulaire 20 du boîtier 16 comprend (figures 2 et 3) un passage axial cylindrique borgne 48 de réception d'une extrémité de la tige 22 précitée, et qui traverse un logement 50 de forme parallélipipédique rectangle destiné à recevoir un insert, qui est par exemple monté dans le logement 50 par clipsage ou encliquetage élastique.

Cet insert peut être constitué par une pièce de fixation de l'extrémité de la tige 22, par un écrou 52 (figure 1) dans lequel est vissée l'extrémité filetée de la tige 22, et/ou par des garnitures 54 d'une matière élastiquement déformable telle que du caoutchouc, permettant d'amortir et d'absorber les chocs et les vibrations.

La cage de l'articulation à rotule selon l'invention est utilisée de la façon suivante :
la pièce 18 est introduite dans la fente ou lumière 28 du boîtier 16 par son extrémité comportant la fente 34. Il suffit pour cela de pousser sur la pièce 18 pour refermer légèrement la fente 34 et introduire les rebords 46 du côté 36 à l'intérieur de la fente ou lumière 28, puis de pousser la pièce 18 jusqu'à ce que les rebords 46 de ce côté 36 ressortent de l'autre côté du boîtier 16 et s'écartent élastiquement en réalisant ainsi un clipsage ou encliquetage élastique de la pièce 18 dans la fente ou lumière 28 du boîtier 16. Dans cette position, l'orifice central 32 de la pièce 18 est sensiblement centré sur l'axe commun du passage 24 et de la cavité semi-sphérique 14, le jeu de la pièce 18 dans la fente ou lumière 28 étant sensiblement nul dans la direction indiquée par la double flèche 56 de la figure 3 et de quelques millimètres dans la direction indiquée par la double flèche 58 de cette figure.

Le montage de la rotule 10 dans la cage est illustré aux figures 6 à 8, dans lesquelles le boîtier 16 a été représenté sous forme d'un bloc rectangulaire pour simplifier le dessin.

On commence par introduire la rotule 10 dans le passage cylindrique 24 du boîtier 10 (figure 6) jusqu'à ce que l'extrémité inférieure de la rotule soit reçue dans la surface tronconique 40 de l'orifice central de la pièce 18, celle-ci se trouvant alors en appui sur le fond de la fente ou lumière 28, c'est-à-dire dans la zone la plus large de cette fente ou lumière 28.

Par poussée sur la tige 12 de la rotule 10, on fait passer cette rotule à travers l'orifice central 32 de la pièce 18 (figure 7) ce qui se traduit par l'expansion élastique radiale de cette pièce et de son orifice central.

La rotule 10 est ensuite amenée dans la cavité semi-sphérique 14 du boîtier 16 (figure 8). Dans cette position, la pièce 18 se resserre élastiquement sur la rotule 10 et tend à s'appliquer sur la paroi supérieure de la fente ou lumière 28 du boîtier 16. Les faces obliques 44 des côtés 42 de la pièce 18 sont en appui sur les faces obliques 30 de la fente ou lumière 28, et la surface 38 en anneau sphérique de l'orifice central de la pièce 18 est en appui sur la partie supérieure de la rotule 10 et forme un guidage en rotation de la rotule. Dans cette position, la pièce 18 peut être déformée élastiquement de façon faible, dans le sens de l'expansion radiale, ce qui assure une légère contrainte sur la rotule 10 et permet un rattrapage du jeu et de l'usure.

Inversement, pour démonter la rotule 10, il suffit de tirer sur sa tige 12 dans le sens indiqué par la flèche 60 en figure 8, avec un effort suffisant pour vaincre la résistance de la pièce 18.

L'effort nécessaire au montage de la rotule dans la cage est par exemple de l'ordre de 15 daN tandis que l'effort d'extraction de la rotule est plusieurs fois supérieur, par exemple de l'ordre de 45 daN. Cette différence vient de ce que, au montage de la rotule dans la cage, la pièce 18 peut s'expanser radialement à l'intérieur de la zone la plus large de la fente ou lumière 28 tandis qu'au démontage de la rotule, la pièce 18 sollicitée dans le sens de la flèche 60 par la traction exercée sur la tige 12 de la rotule, doit descendre à l'intérieur de la fente ou lumière 28, c'est-à-dire se déplacer dans la direction opposée à celle de la flèche 60, pour pouvoir s'expanser radialement et permettre le passage de la rotule 10.

En fonction des utilisations de l'articulation à rotule, la tige 22 est montée de façon fixe et rigide dans la queue tubulaire 20 du boîtier 16, ou bien de façon rigide et réglable au moyen de l'écrou 52, ou encore de façon à filtrer les vibrations grâce aux garnitures 54 de caoutchouc ou matière analogue.

Le boîtier 16 de la cage selon l'invention est réalisé en une matière plastique à propriétés auto-lubrifiantes et résistant bien à des températures élevées de l'ordre de 200°C. La pièce 18 est réalisée par exemple en un polyamide à faible coefficient de frottement sur la rotule 10.

De façon générale, la cage d'articulation à rotule selon l'invention est légère et peu coûteuse. Son assemblage ne nécessite pas d'outils particuliers. Elle peut être associée à des moyens intégrés d'amortissement des vibrations et de chocs sans augmentation de son encombrement.

## Revendications

1. Cage d'articulation à rotule du type permettant un montage de la rotule dans la cage par poussée de la rotule à l'intérieur de la cage et un démontage de la rotule par traction sur celle-ci, comprenant un boîtier rigide (16) comportant un passage cylindrique (24) d'introduction de la rotule (10), ce passage débouchant par une extrémité à l'extérieur du boîtier (16) et par son autre extrémité dans une cavité (14) sensiblement semi-sphérique formée au diamètre de la rotule, et des moyens élastiquement déformables (18) qui sont montés dans le boîtier (16) au raccordement entre le passage cylindrique (24) et la cavité semi-sphérique (14) dans un plan perpendiculaire à l'axe dudit passage (24) et qui sont reçus dans un logement ayant une dimension dans le plan précité supérieure à celle des moyens élastiquement déformables pour permettre leur expansion élastique au montage et au démontage de la rotule, ces moyens (18) comportant ou délimitant un orifice central (32) de passage de la rotule (10) et étant destinés à exercer sur celle-ci un effort élastique de serrage tendant à la maintenir dans la cavité semi-sphérique précitée, caractérisée en ce que le logement des moyens élastiquement déformables (18) est une fente ou lumière (28) formée dans le boîtier (16) et débouchant à l'extérieur de celui-ci pour permettre le montage des moyens élastiquement déformables (18) dans le boîtier.

2. Cage selon la revendication 1, caractérisée en ce que ladite fente ou lumière (28) a une section transversale trapézoïdale dont la petite base est située du côté du passage cylindrique (24) d'introduction de la rotule, et une hauteur supérieure à l'épaisseur des moyens élastiquement déformables (18).

3. Cage selon la revendication 1 ou 2, caractérisée en ce que l'orifice central (32) des moyens élastiquement déformables (18) comporte une surface interne (38) en anneau sphérique au diamètre de la rotule, destinée à s'appliquer sur une surface correspondante de la rotule pour le guidage en rotation de celle-ci.

4. Cage selon la revendication 1, 2 ou 3, caractérisée en ce que l'orifice central (32) comporte, du côté du passage cylindrique (24) précité, une surface interne (40) tronconique facilitant l'introduction de la rotule.

5. Cage selon l'une des revendications précédentes, caractérisée en ce que les moyens élastiquement déformables sont constitués d'une pièce plate (18) en matière plastique rigide à contour carré ou rectangulaire, comportant l'orifice central (32) précité, ainsi qu'une fente radiale (34) reliant cet orifice à un bord (36) de la dite pièce et permettant une expansion élastique radiale de celle-ci et de l'orifice central (32).

6. Cage selon la revendication 5, caractérisée en ce que les côtés (42) de la pièce plate (18) s'étendant le long des faces obliques (30) de ladite fente ou lumière (28) comportent des faces obliques (44) parallèles à celles de la fente ou lumière (28).

7. Cage selon la revendication 5 ou 6, caractérisée en ce que la pièce plate (18) est montée par clipsage ou encliquetage élastique dans la fente ou lumière (28) du boîtier.

8. Cage selon l'une des revendications 5 à 7, caractérisée en ce que la pièce plate (18) est en une matière plastique à faible coefficient de frottement sur la rotule, par exemple en polyamide.

9. Cage selon l'une des revendications précédentes, caractérisée en ce que le boîtier (16) est moulé d'une pièce en une matière plastique à propriétés auto-lubrifiantes, et en ce que la cavité sensiblement semi-sphérique (14) recevant la rotule est formée directement par la surface interne du boîtier.

10. Cage selon l'une des revendications précédentes, caractérisée en ce que le boîtier (16) comporte une queue cylindrique tubulaire (20) de montage d'une tige rigide (22) dont l'axe est par exemple perpendiculaire à celui du passage (24) d'introduction de la rotule dans le boîtier.

11. Cage selon la revendication 10, caractérisée en ce que ladite queue tubulaire (20) comporte un logement transversal (50) de réception d'un insert tel qu'un écrou (52) de fixation de la tige rigide (22) et/ou des garnitures (54) en caoutchouc ou autre matière élastiquement déformable d'amortissement des vibrations et chocs.

## Claims

1. A ball-joint cage of the type enabling the ball to be installed in the cage by pushing the ball into the cage, and enabling the ball to be removed from the cage by pulling it out, the cage comprising both a rigid socket (16) having a cylindrical passage (24) through which the ball (10) is inserted, said passage opening out at one end to the outside of the socket (16) and at its other end into a cavity (14) that is substantially hemispherical and having the same diameter as the ball, and resiliently deformable means (18) mounted in the socket (16) where the cylindrical passage (24) meets the hemispherical cavity (14) and occupying a plane perpendicular to the axis of said passage (24) and received in a housing whose size in said plane is greater than the size of the resiliently deformable means so as to enable the means to expand resiliently while the ball is being inserted and withdrawn, said means (18) including or defining a through central orifice (32) for the ball (10) and being designed to exert a resilient clamping force thereon tending to keep the ball in the above-specified hemispherical cavity, the cage being characterized in that the housing for the resiliently deformable means (18) is a slot or opening (28) formed in the socket (16) and opening to the outside thereof to enable the resiliently deformable means (18) to be installed in the socket.

2. A cage according to claim 1, characterized in that said slot or opening (28) has a trapezium-shaped cross-section with its small base situated adjacent to the cylindrical passage (24) for insertion of the ball, and with its height being greater than the thickness of the elastically deformable means (18).

3. A cage according to claim 1 or 2, characterized in that the central orifice (32) of the elastically deformable means (18) includes an inside surface in the form of a spherical zone having the same diameter as the ball, and designed to bear against a corresponding surface of the ball to guide it in rotation.

4. A cage according to claim 1, 2, or 3, characterized in that the central orifice (32) includes, adjacent to said cylindrical passage (24), a frustoconical inside surface (40) facilitating insertion of the ball.

5. A cage according to any preceding claim, characterized in that the resiliently deformable means are constituted by a flat part (18) made of rigid plastics material having an outline that is square or rectangular, including the above-specified central orifice (32), and also a radial slot (34) connecting said orifice to one of the edges (36) of said part, and enabling resilient radial expansion thereof and of the central orifice (32).

6. A cage according to claim 5, characterized in that the sides (42) of said flat part (18) which extend along the oblique faces (30) of said slot or opening (28) include oblique faces (44) parallel to those of the slot or opening (28).

7. A cage according to claim 5 or 6, characterized in that the flat part (18) is mounted by resilient snap-fastening or clipping in the slot or opening (28) of the socket.

8. A cage according to any one of claims 5 to 7, characterized in that the flat part (18) is made of a plastics material having a low coefficient of friction against the ball, e.g. a polyamide.

9. A cage according to any preceding claim, characterized in that the socket (16) is integrally molded in a plastics material having self-lubricating properties, and in that the substantially hemispherical cavity (14) receiving the ball is formed directly by the inside surface of the socket.

10. A cage according to any preceding claim, characterized in that the socket (16) includes a tubular cylindrical tang (20) for receiving a rigid rod (22) whose axis is, for example, perpendicular to the axis of the passage (24) through which the ball is inserted into the socket.

11. A cage according to claim 10, characterized in that said tubular tang (20) includes a transverse housing (50) for receiving an insert such as a nut (52) for fixing the rigid rod (22) and/or fittings (54) of rubber or other elastically deformable material for damping vibration and shock.

## Patentansprüche

1. Kugelkopf-Gelenkkäfig der Art, welcher eine Montage des Kugelkopfs in dem Käfig durch Drücken des Kugelkopfs in das Innere des Käfigs und eine Demontage des Kugelkopfs durch Ziehen an demselben gestattet, umfassend ein steifes bzw. starres Gehäuse (16), das einen zylindrischen Durchgang (24) für das Einführen des Kugelkopfs (10) hat, wobei dieser Durchgang durch ein Ende in das Äußere des Gehäuses (16) und durch sein anderes Ende in einen Hohlraum (14) mündet, der im wesentlichen halbkugelig mit dem Durchmesser des Kugelkopfs geformt ist, und deformierbare elastische Mittel (18), die in dem Gehäuse (16) am Übergang zwischen dem zylindrischen Durchgang (24) und dem halbkugeligen Hohlraum (14) in einer zu der Achse des Durchgangs (24) senkrechten Ebene montiert sind, und die in einem Sitz aufgenommen sind, der eine Dimension in der vorgenannten Ebene hat, die größer ist als jene der deformierbaren elastischen Mittel, um ihre elastische Ausdehnung bei der Montage und bei der Demontage des Kugelkopfs zu gestatten, wobei diese Mittel (18) eine mittige Öffnung (32) zum Durchgang für den Kugelkopf (10) haben oder begrenzen und dazu bestimmt sind, auf denselben eine elastische Befestigungs- bzw. Einspannkraft auszuüben, welche das Bestreben hat, ihn in dem vorgenannten halbkugeligen Hohlraum zu halten, dadurch **gekennzeichnet,** daß der Sitz der deformierbaren elastischen Mitte (18) ein Spalt bzw. Schlitz bzw. Einschnitt oder eine Öffnung (28) ist, der bzw. die in dem Gehäuse (16) ausgebildet ist und in dem Äußeren desselben mündet, um die Montage der deformierbaren elastischen Mittel (18) in dem Gehäuse zu gestatten.

2. Käfig gemäß Anspruch 1, dadurch **gekennzeichnet,** daß der Spalt bzw. Schlitz bzw. Einschnitt oder die Öffnung (28) einen trapezförmigen Querschnitt hat, dessen kleine Basis sich auf der Seite des zylindrischen Durchgangs (24) zur Einführung des Kugelkopfs befindet, und eine Höhe, die größer als die Dicke der elastischen deformierbaren Mittel (18) ist.

3. Käfig gemäß Anspruch 1 oder 2, dadurch **gekennzeichnet,** daß die mittige Öffnung (32) der elastischen deformierbaren Mittel (18) eine innere Oberfläche (38) von einem sphärischen Ring mit dem Durchmesser des Kugelkopfs hat, die dazu bestimmt ist, sich auf eine entsprechende Oberfläche des Kugelkopfs für die Drehführung desselben aufzudrücken.

4. Käfig gemäß Anspruch 1, 2 oder 3, dadurch **gekennzeichnet,** daß die mittige Öffnung (32) auf der Seite des vorerwähnten zylindrischen Durchgangs (24) eine kegelstumpfförmige innere Oberfläche (40) hat, welche die Einführung des Kugelkopfs erleichtert.

5. Käfig gemäß einem der vorherigen Ansprüche, dadurch **gekennzeichnet,** daß die elastischen deformierbaren Mittel von einem flachen Teil (18) aus steifem bzw. starrem Kunststoff mit quadratischer oder rechteckiger Kontur gebildet sind, das die vorerwähnte mittige Öffnung (32) hat, sowie einen radialen Spalt bzw. Schlitz bzw. Einschnitt (34), welcher die Öffnung mit einem Rand (36) des genannten Teils verbindet und eine elastische radiale Dehnung desselben sowie der mittigen Öffnung (32) gestattet.

6. Käfig gemäß Anspruch 5, dadurch **gekennzeichnet,** daß sich die Seiten (42) des flachen Teils (18) längs der geneigten Flächen (30) des Spalts bzw. Schlitzes bzw. Einschnitts oder der Öffnung (28) erstrecken, der bzw. die geneigte Flächen (44) hat, die parallel zu jenen des Spalts bzw. Schlitzes bzw. Einschnitts oder der Öffnung (28) sind.

7. Käfig gemäß Anspruch 5 oder 6, dadurch **gekennzeichnet,** daß das flache Teil (18) in dem Spalt bzw. Schlitz bzw. Einschnitt oder der Öffnung (28) des Gehäuses durch elastische Klemmung oder Sperrung angebracht ist.

8. Käfig gemäß einem der Ansprüche 5 bis 7, dadurch **gekennzeichnet,** daß das flache Teil (18) aus einem Kunststoff mit geringem Reibungskoeffizienten auf dem Kugelkopf, z.B. aus Polyamid, ist.

9. Käfig gemäß einem der vorhergehenden Ansprüche, dadurch **gekennzeichnet,** daß das Gehäuse (16) einstückig aus einem Kunststoff mit selbstschmierenden Eigenschaften geformt ist, und daß der im wesentlichen halbkugelförmige Hohlraum (14), der den Kugelkopf aufnimmt, direkt von der inneren Oberfläche des Gehäuses gebildet ist.

10. Käfig gemäß einem der vorhergehenden Ansprüche, dadurch **gekennzeichnet,** daß das Gehäuse (16) einen zylindrischen rohrförmigen Stiel (20) für die Montage einer starren bzw. steifen Stange (22) hat, dessen Achse z.B. senkrecht zu derjenigen des Durchgangs (24) für das Einführen des Kugelkopfs in das Gehäuse ist.

11. Käfig gemäß Anspruch 10, dadurch **gekennzeichnet,** daß der rohrförmige Stiel (20) einen Quersitz (50) für die Aufnahme eines Einsatzes, wie einer Mutter (52), zum Befestigen der starren bzw. steifen Stange (22) und/oder für Einlagen (54) aus Kautschuk oder anderem deformierbarem elastischem Material zur Dämpfung von Schwingungen und Stößen hat.
